# EUROPEAN PATENT SPECIFICATION

(11) **EP 0 638 473 B1**
(45) Date of publication and mention of the grant of the patent: **14.05.1997**
(21) Application number: 94112583.3
(22) Date of filing: 11.08.1994
(51) Int. Cl.: B62H 5/00, E05B 67/00

(54) **Locking device**
Verriegelungsvorrichtung
Dispositif de verrouillage

(30) Priority: 11.08.1993 JP 220636/93
(43) Date of publication of application: 15.02.1995
(73) Proprietor: KABUSHIKI KAISHA AIAISHI, Iwata-shi, Shizuoka-ken (JP)
(72) Inventor: Okada, Mitsuhiro, c/o K.K. Aiaishi, Iwata-shi, Shizuoka-ken (JP); Muramatsu, Yasuhiro, c/o K.K. Aiaishi, Iwata-shi, Shizuoka-ken (JP); Yamaoka, Hiroshi, c/o K.K. Aiaishi, Iwata-shi, Shizuoka-ken (JP)
(74) Representative: Grünecker, Kinkeldey, Stockmair & Schwanhäusser Anwaltssozietät

(56) References cited:
- DE-U- 9 307 702
- FR-A- 2 619 846
- US-A- 3 696 647
- US-A- 4 760 718

## Description

This invention relates to a locking device for locking, while parking, vehicles such as motorcycles, bicycles, etc., the locking device comprising a locking chain body having a plurality of connecting members pivotably connected to each other at adjacent end portions thereof through a pivot connection including a pivot pin.

Such locking devices have been disclosed in Japanese Unexamined Patent Publication Sho62-59783 or in US-4,760,718.

Such a locking device is provided with a locking chain body having a plurality of rod members arranged in longitudinal succession and having opposite ends of two adjacent ones of the rod members piled on each other and connected with each other through a pivot shaft pivotally relative to each other, so that, when the locking chain body is formed like a loop by pivoting these rod members, both ends of the locking chain body may be connectable with each other. Further, this locking device is provided with a lock portion for locking both ends of the locking chain body as connected.

When intending to prevent the parked vehicle from getting stolen, the locking chain body above is made penetratable, for example, one wheel. Then this locking chain body is formed like a loop enclosing a fixed member of the vehicle, eg. the front fork of the motorcycle, or a fixed structure such as a utility pole, and both ends of the locking chain body are connected with each other and is locked with the lock portion in the connected state.

Thus, the locking chain body is locked in a state with the vehicle wheel prevented from revolving, and the vehicle is prevented from getting stolen.

Hereupon, since both mating surfaces through which end portions of two adjacent rod members are piled on each other slide over each other while both rod members pivot relative to each other, both mating surfaces are not in close contact with each other but some gap required for allowing mutual pivoting of both rod members is provided between both mating surfaces.

However, if such a gap is provided between both mating surfaces, someone attempting to steal the vehicle may chop the pivot chaft with a chisel driven into this gap or with a metal cuting saw inserted in this gap.

Therefore, the locking device having such a conventional structure is not sufficient for securly preventing the vehicle from getting stolen.

Accordingly it is an objective of the present invention to provide a locking device with an increased security against getting broken open.

According to the present invention this objective is performed in that an interstice between adjacent surfaces of the adjacent end portions extends axially symmetrical at least in part under an angle or offset with respect to a plane perpendicular to the axis of the pivot pin.

Therefore, if a thief attempting to steal an object such as a motorcycle inserts a chisel as a tool for stealing between both adjacent surfaces, since the chisel has some blade width, the inserted tip end of the tool hits against the surface and its further entry is prevented.

Also in the case where the tool is a metal cutting saw, when the saw is inserted in the gap between the adjacent surfaces, the inserted cutting edge of the tool hits against surfaces near the inlet of the gap.

Preferred embodiments of the invention are laid down in the further dependent claims.

Hereinafter the present invention is explained and illustrated in greater detail by means of preferred embodiments thereof in conjunction with the accompanying drawings wherein:
Fig. 1 shows a locking device according to a first embodiment of the invention in a sectional view taken along the line 1-1 of Fig. 3,
Fig. 2 is an overall perspective view of the locking device according to the embodiment of Fig. 1,
Fig. 3 is a top view of the locking device according to the embodiment of Fig. 1,
Fig. 4 is a top view of a pivot shaft of the locking device according to the embodiment of Fig. 1,
Fig. 5 shows a pivot shaft of a locking device according to a second embodiment of the invention in a top view,
Fig. 6 shows a locking device according to a third embodiment of the invention in a sectional view corresponding to the view of Fig. 1,
Fig. 7 shows a locking device according to a further embodiment in a sectional view corresponding to the view of Fig. 1,
Fig. 8 is a top view of the locking device according to the embodiment of Fig. 7 in a sectional view,
Fig. 9 shows a locking device according to a further embodiment in a sectional view corresponding to the view of Fig. 1,
Fig. 10 shows a locking device according to a further embodiment of the invention in a sectional view corresponding to the view of Fig. 1.

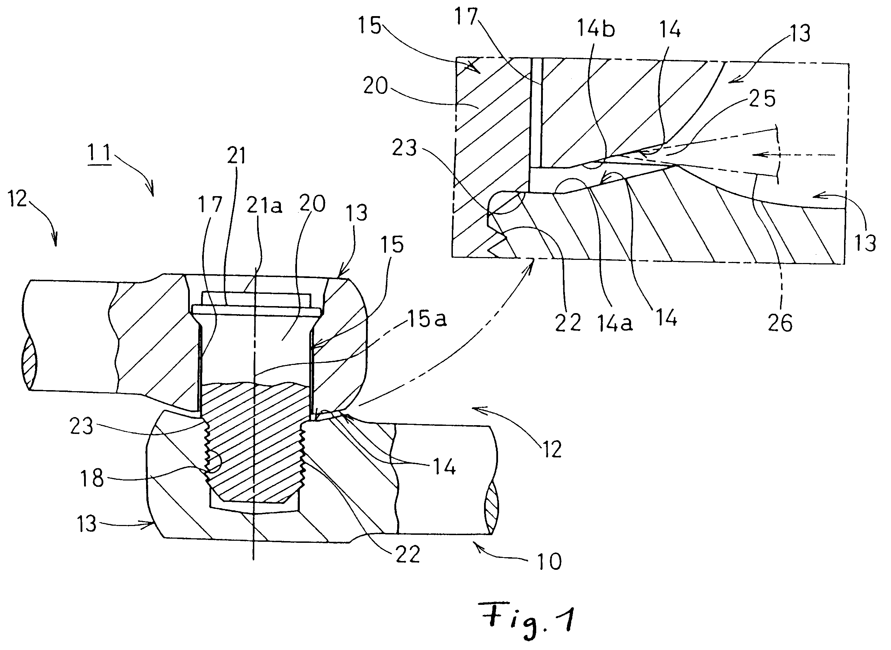

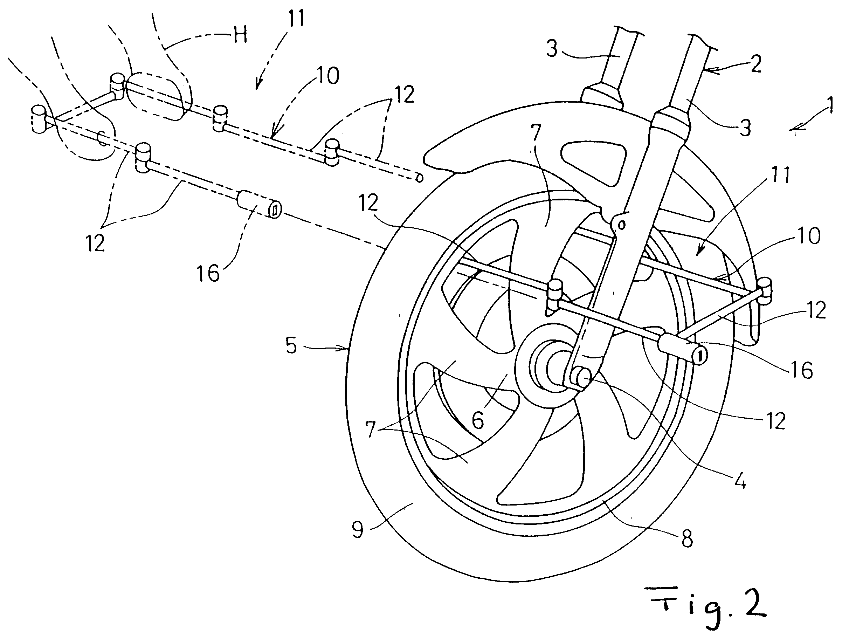

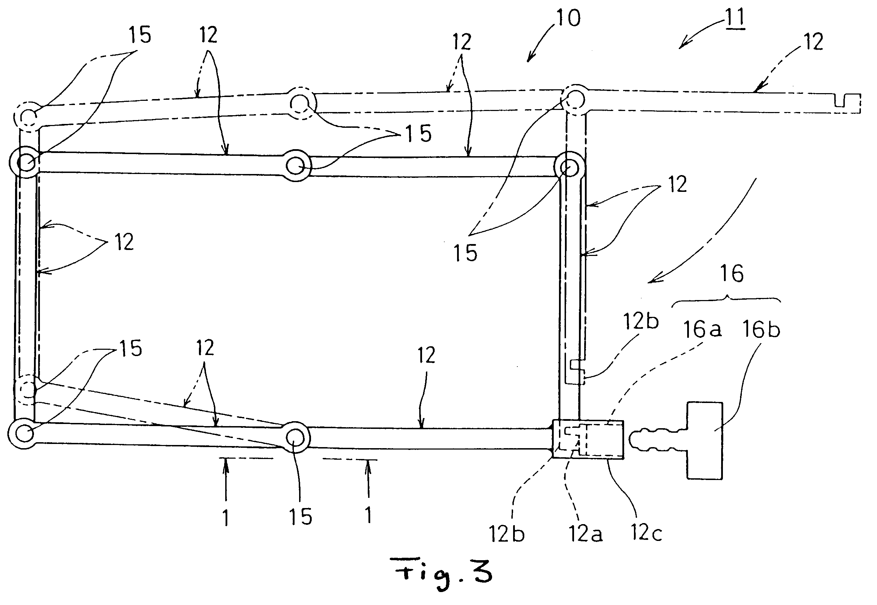

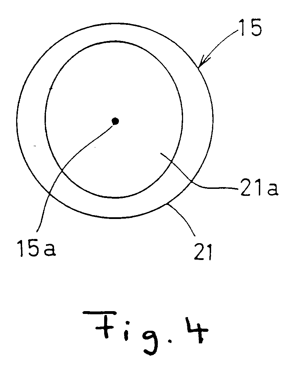

Figs. 1 through 4 show a locking device according to a first embodiment of the invention.

Fig. 2 shows a locking device 11 depicted in conjunction with a motorcycle 1, an example of saddle-riding type vehicles, having a front fork 2 mounted on its front. The front fork 2 has paired left and right fork tubes 3. A wheel shaft 4 is suspended on the lower ends of both fork tubes 3, and a front wheel 5 is borne on the front shaft 4. The front wheel 5 is composed of a hub 6, spokes 7, rim 8 and tire 9.

The anti-theft locking device 11 locks the front wheel 5 in a state prevented from revolving when the motorcycle 1 is parked.

As shown in Figs. 2 and 3, the locking device 11 has a locking chain body 10 composed of six rod members 12 connected in succession. The opposite end portions 13 of two adjacent rod members 12 are piled on each other. Both mating surfaces 14 of these end portions 13 through which these end portions 13 are piled on each other have a pivot shaft 15 perpendicularly penetrating themselves so that both end portions 13 may be pivotally connected through the pivot shaft 15 and both rod members 12 may be pivoted relative to each other about the axis 15a of the pivot shaft 15. By thus pivoting the rod members 12 about the axis 15a, the locking chain body 10 can be folded or unfolded, and these rod members 12 and the pivot shafts 15 constitute the locking chain body 10. Both rod members 12 and pivot shafts 15 are made of chromium-molybdenum steel and are case-hardened to obtain a sufficient hardness.

On one of both ends of the locking chain body 10 is fixed an outer cylinder 12c having an engaging hole 12a formed therethrough at one end thereof, while an engaging projection 12b is formed on the other end. The locking chain body 10 is so constructed that the engaging hole 12a and the engaging projection 12b can be disengageably engaged when the locking chain body 10 is formed like a predetermined loop shown in Fig. 3 by pivoting the rod members 12.

The locking device 11 is provided with a lock portion 16 capable of locking, by a locking operation, the engaging hole 12a and the engaging projection 12b in the engaged state when engaged with each other. The lock portion 16 is composed of a cylinder lock 16a contained in the outer cylinder 12c and a key 16b capable of locking or unlocking the cylinder lock 16a.

To prevent the parked motorcycle 1 from getting stolen, the locking chain body 10 is folded to become generally U-shaped as shown in Figs. 2 and 3 in dash-and-double-dotted lines by pivoting the midway rod members 12 relative to each other, and then the U-shaped docking chain body 10 is made penetrate the front wheel between spokes 7 with the midsection of the locking chain body 10 held with hands H.

Next, the rod members 12 are pivoted relative to each other so that the locking chain body 10 may become a predetermined loop and the fork tubes 3 may be contained within the loop of the locking chain body 10 as shown in Fig. 3 in dash-and-single-dotted lines.

Next, as shown in Figs. 2 and 3 in solid lines, the engaging hole 16a and the engaging projection 16b are engaged with each other and are locked by the lock portion 16 as engaged. Thus, the front wheel 5 is locked in a state prevented from revolving, and the motorcycle 1 is prevented from getting stolen.

The pivotal connection of the adjacent rod members 12 is described hereafter in further detail referring to Fig. 1.

One of opposite end portions 13 of two adjacent rod members 12 has a through hole 17 bored therethrough, and the other has a bottomed screw hole 18 bored therein as shown in Fig. 1. The pivot shaft 15 is composed of a shank portion 20, tapered flange type head portion 21 formed on one end thereof and a screw portion 22 formed on the other end thereof and having an outer diameter smaller than that of the shank portion 20 so that a step surface 23 may be formed between these two portions.

When connecting two adjacent rod members 12 at the end portions thereof with each other, the shank portion 20 and the head portion 21 are inserted in the through hole 17, while the screw portion 22 is screwed into the screw hole 18. By thus screwing, the step surface 23 of the pivot shaft 15 is pressed against the mating surface 14 of the rod member 12 having the screw hole 18 and the pivot shaft 15 is fixed thereon, while the rod member 12 having the through hole 17 is pivotable about the axis 15a of the shank portion 20. Part of the inner surface of the through hole 17 is taper-fitted over the tapered head portion 21 to prevent the rod member 12 from coming off the pivot shaft 15. A slight gap 25 is provided between both mating surfaces 14 to make pivotal movements of both rod members 12 smooth.

The pivot shaft 15 has a tool engaging projection 21a formed on the head portion 21 thereof and this projection 21a is elliptic as seen along the axis 15a thereof as shown in Fig. 4. That is, to screw the pivot shaft 15 into or out of the screw hole 18 requires a special tool.

One of both mating surfaces 14 is formed as a concave surface 14a like a truncated cone, while the other 14 is formed as a convex surface 14b like a truncated cone to be fitted into the concave surface 14a. These concave and convex surfaces 14a and 14b are generally centered on the axis 15a of the pivot shaft 15 and are generally of the same size as each other so that they may be in surface contact with each other and may slide over each other about the axis 15a.

When a thief attempting to steal the motorcycle 1 locked as shown in Fig. 1 inserts a tool 26 for stealing, e.g. . a chisel, into the gap 25 between both mating surfaces 14, since the chisel has some blade width, the inserted tip end of the tool 26 hits against the convex surface 14b near the inlet of the gap 25 and its further entry is prevented.

Therefore, since it becomes necessary to cut off a portion of the convex surface 14b at the end portion 13 before chopping the pivot shaft 15, it becomes difficult to chop the pivot shaft 15.

Also in the case where the tool 26 is a metal cutting saw, when the saw is inserted in the gap 25, the inserted tip end hits against the convex surface 14b near the inlet of the gap 25.

Therefore, also in the case where a metal cutting saw is used, it becomes necessary to cut off a portion of the convex surface 14b before chopping the pivot shaft 15. Furthermore, especially in the case where the metal cutting saw obliquely hits against the convex surface 14b, since it is difficult to cut this surface, it becomes more difficult to chop the pivot shaft 15.

Although the description above is for the structure shown in Fig. 1, the pivot shaft 15 may be fixed on one mating surface 14 by making the diameters of the shank portion 20 and the screw portion 22 equal to each other and pressing the tip end of the screw portion 22 against the inner bottom of the bottomed screw hole 18. With this structure, stress is prevented from being concentrated in the nook portion between the screw portion and 22 and the step portion 23, and the breakage of the pivot shaft 15 is securely prevented.

The concave surface 14a and the convex surface 14b may both be spherical surfaces centered generally on the axis 15a of the pivot shaft 15. Further, the rod members 12 constituting the locking chain body 10 may be not straight but curved, e.g., J-shaped, and its number may be only two. The lock portion 16 may be such as a padlock which locks both ends of the locking chain body 10 without engaging them with each other. The structure with which the vehicle is tied to prevent it from getting stolen may be a house door, gate door, etc.

Succeeding drawings show other embodiments. Descriptions are omitted for the structures and functions of the other embodiments common to those of Embodiment 1 above by assigning common reference symbols to the common elements in the drawings, and only differences are described hereafter.

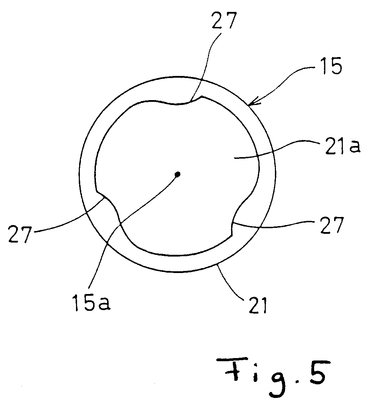

Fig. 5 shows a locking device according to a second embodiment.

In this embodiment, the tool engaging projection 21a formed on the head portion 21 of the pivot shaft 15 has three engaging recesses 27 formed on the outer periphery thereof. That is, to screw the pivot shaft 15 into or out of the screw hole 18 requires a special tool.

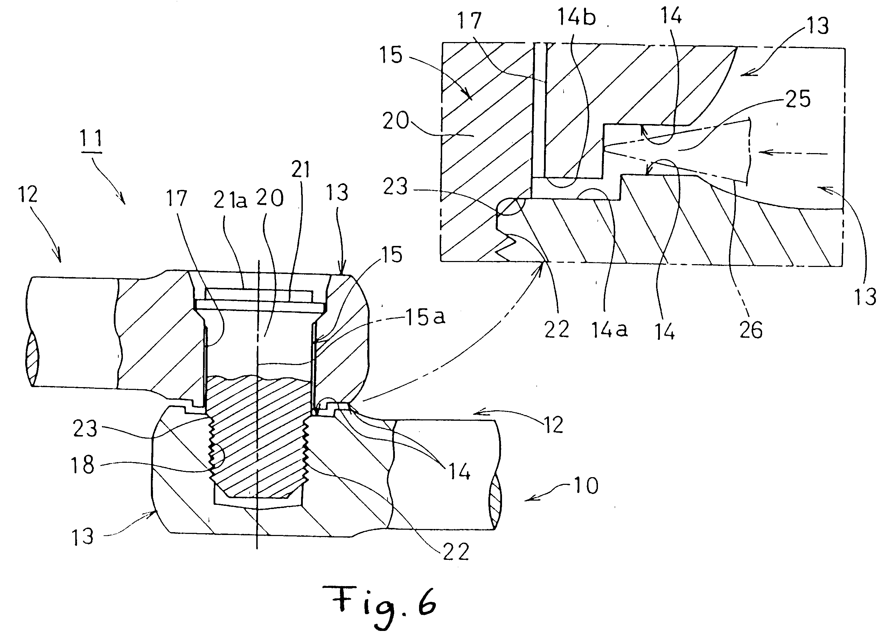

Fig. 6 shows a locking device according to a third embodiment.

In this embodiment, the concave surface 14a and the convex surface 14b are constituted of the flat bottom of a cylindrical recess and the flat end of a cylindrical projection, respectively.

When a tool 26 is inserted in the gap 25 between both mating surfaces 14, the inserted end of this tool 26 hits against the outer surface of the convex surface 14b and will not reach the pivot shaft 15.

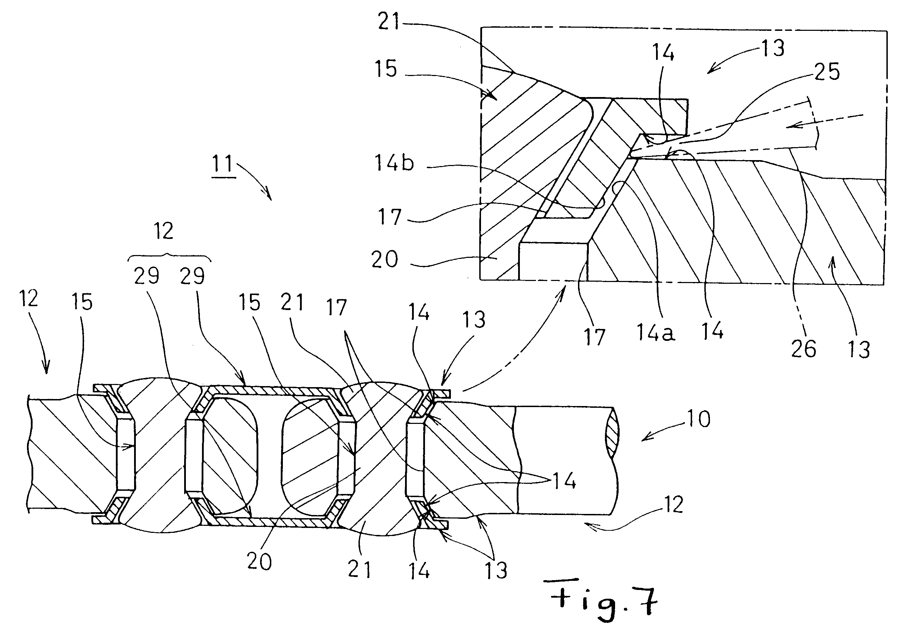

Figs 7. and 8 show a locking device according to a fourth embodiment.

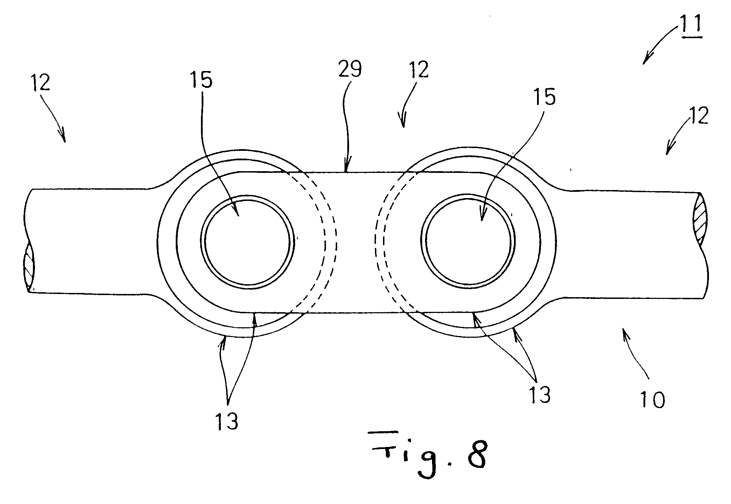

In this embodiment, two adjacent rod members 12 to be pivotally connected with each other are connected with each other through two pivot shafts 15 and a pair of chain link plates 29 facing each other axially of the pivot shafts 15. Describing in further detail, the end portion 13 of one rod member 12 is interposed between end portions of the paired chain link plates 29, the end portion 13 of the other rod member 12 is interposed between the other end portions of the paired chain link plates 29, and are connected with one another through two pivot shafts 15 as shown in Figs. 7 and 8.

The mating surface 14b of the end portion of the chain link plate 29 to be piled on the mating surface 14a of the end portion 13 of the rod member 12 and penetrated by the pivot shaft 15 is formed conically by pressing so that the mating surface 14b may be formed as a convex surface like a truncated cone, while the mating surface 14a of the end portion 13 of the rod member 12 is formed conically as a concave surface like a truncated cone. The pivot shaft 15 is constituted of a rivet having heads 21 formed on both ends thereof.

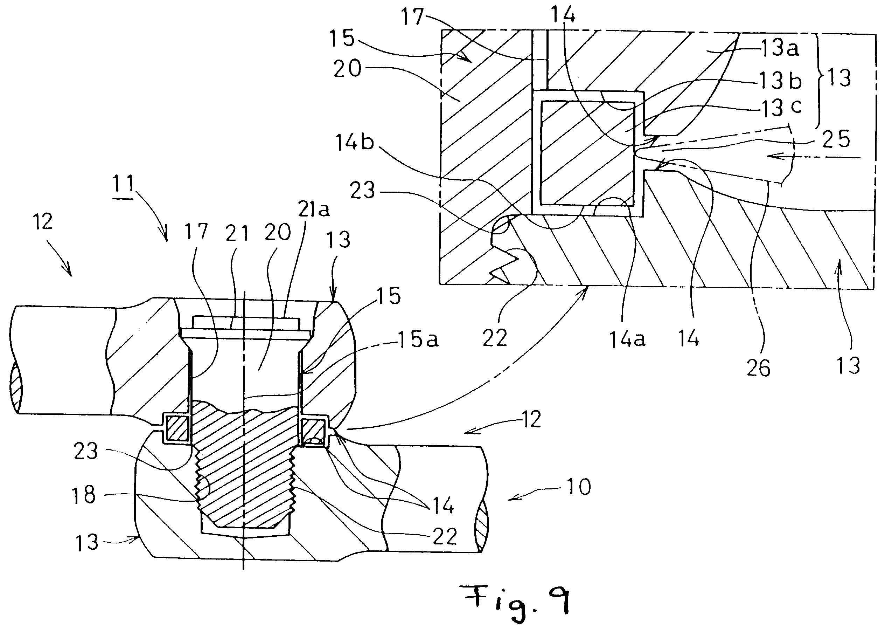

Fig. 9 shows a locking device according to a fifth embodiment.

In this embodiment, the end portion 13 on which a convex surface 14b is to be formed is constructed with a base portion 13a, a fitting groove 13b formed on the mating surface 14 of the base portion 13a coaxially with the axis 15a of the pivot shaft 15 and an annular member 13c to be fitted in the fitting groove 13b rotatably about the axis 15a, and the portion of the outer surface of the annular member 13c projecting out of the fitting groove 13b constitutes the convex surface 14b. The annular member 13c is made of chromium-molybdenum steel and is case-hardened to obtain a sufficient hardness.

When a tool 26 is inserted in the gap 25, the inserted end of the tool 26 hits against the outer periphery of the annular member 13c, i.e., outer periphery of the convex surface 14b. When an outer force is applied on the outer periphery of the annular member 13c from the tool 26, the annular member 13c is rotated freely by this outer force, which prevents the outer force above from being applied on the annular member 13c.

Therefore, it becomes extremely difficult to chop the pivot shaft 15 with the tool 26, and the motorcycle 1 is more securely prevented from getting stolen.

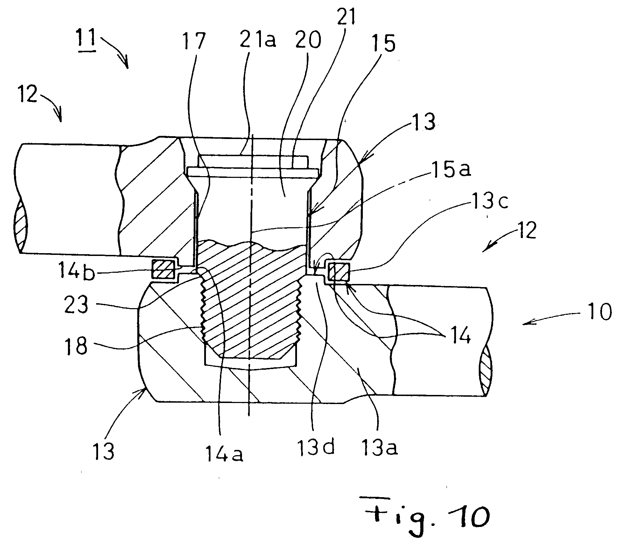

Fig. 10 shows a locking device according to a sixth embodiment.

In this embodiment, the end portion 13 on which a concave surface 14a is to be formed is constructed with a base portion 13a, an annular projection 13d projected from the mating surface 14 of the base portion 13 coaxially with the axis 15a of the pivot shaft 15 and an annular member 13c to be fitted over the annular projection 13d rotatably about the axis 15a, and a concave surface 14a is formed with the projected end of the annular projection 13d and the inner periphery of the annular member 13c. The material of the annular member 13c is similar to that in Embodiment 5.
[0059]
Hereupon, when a tool 26 is inserted in the gap between the base portion 13a and the annular member 13c, the inserted end of the tool 26 hits against the outer periphery of the annular projection 13d.

According to the above described preferred embodiment of this invention, the locking device is provided with a locking chain body having a plurality of rod members and having opposite ends of two adjacent ones of the rod members piled on each other and connected with each other through a pivot shaft pivotally relative to each other so that the locking chain body may be foldable and unfoldable, and further provided with a lock portion for disconnectably connecting both ends of the locking chain body through a locking operation, wherein one of mating surfaces through which end portions of two adjacent rod members are piled on each other is formed as a concave surface while the other is formed as a convex surface which fits in the concave surface above.

Therefore, when a thief attempting to steal an object while this object is locked with the locking device according to this invention inserts a tool for stealing, e.g. , a chisel, into the gap between both mating surfaces, since the chisel has some blade width, the inserted tip end of the tool hits against the convex surface near the inlet of the gap above and its further entry is prevented.

Therefore, since it becomes necessary to cut off a portion of the convex surface at the end portion before chopping the pivot shaft, it becomes difficult to chop the pivot shaft.

Also in the case where the tool is a metal cutting saw, when the saw is inserted in the gap, its inserted tip end hits against the convex surface near the inlet of the gap.

Therefore, also in the case where a metal cutting saw is used, it becomes necessary to cut off a portion of the convex surface before chopping the pivot shaft. Furthermore, especially in the case where the metal cutting saw obliquely hits against the convex surface, since it is difficult to cut this surface, it becomes more difficult to chop the pivot shaft .

The state of the vehicle locked by the locking device can be as much securely maintained and the vehicle is as much securely prevented from getting stolen as it becomes difficult to chop the pivot shaft as described above.

## Claims

1. Locking device comprising a locking chain body (10) having a plurality of connecting members (12, 29) pivotably connected to each other at adjacent end portions (13) thereof through a pivot connection (15, 29) including a pivot pin (15), **characterised in that** an interstice (25) between adjacent surfaces (14a, 14b) of said adjacent end portions (13) extends axially symmetrical at least in part under an angle or offset with respect to a plane perpendicular to the axis of said pivot pin (15).

2. Locking device as claimed in claim 1, **characterised in that** the connecting members comprise rod members (12) which are piled on each other with adjacent end portions (13) thereof, said adjacent end portions (13) being connected to each other by said pivot pin (15).

3. Locking device as claimed in claim 1 or 2, **characterised in that** a first adjacent surface (14a) of one of the adjacent end portions (13) is concave while a second adjacent surface (14b) of the other one of the adjacent end portions (13) is formed as a convex surface fitting in said first concave surface (14a).

4. Locking device as claimed in at least one of claims 1 to 3, **characterised in that** a first adjacent surface (14a) of one of the adjacent end portions (13) is provided with a cylindrical recess while the second adjacent surface (14b) of the other one of the adjacent end portions (13) is provided with a cylindrical protrusion fitting into said cylindrical recess.

5. Locking device as claimed in at least one of claims 1 to 4, **characterised in that** an annular ring member (13c) for blocking the access to the pivot pin (15) is disposed between adjacent surfaces (14) of adjacent end portions (13) of the rod members (12).

6. Locking device as claimed in claim 5, **characterised in that** the ring member (13c) is received in grooves (13b) formed in the adjacent surfaces (14) of the adjacent end portions (13).

7. Locking device as claimed in claim 5, **characterised in that** the ring member (13c) surrounds annular projections (13d) formed on the adjacent surfaces (14) of the adjacent end portions (13).

8. Locking device as claimed in claim 1, **characterised in that** the connecting members comprise chain link plates (29) for connecting adjacent rod members (12), end portions (13) thereof being sandwiched between a pair of chain link plates (29), wherein an end portion of said chain link plates (29) is provided with a cone portion (14b) fitting into a mating cone shaped surface (14a) of the end portion (13) of the rod member (12).

9. Locking device as claimed in at least one of the claims 1 to 8, **characterised in that** the pivot pin is formed by a bolt (15) fixedly connected to one of said adjacent end portions (13) of the rod members (12).

10. Locking device as claimed in claim 9, **characterised in that** the bolt (15) is screwed into a screw hole (18) provided in one of said adjacent end portions (13) of the rod members (12) and has a shank portion (20) which is inserted in a through hole (17) of the other one of said adjacent end portions (13), said shank portion having a larger diameter than said screw hole (18) and a greater length than said through hole (17).

## Patentansprüche

1. Schloßvorrichtung mit einem Schloßkettenkörper, der eine Vielzahl von Verbindungselementen (12,29) aufweist, die schwenkbar miteinander an benachbarten Endabschnitten (13) durch eine Gelenkverbindung (15,29) verbunden sind, die einen Gelenkstift (15) aufweist, **dadurch gekennzeichnet,** daß ein Zwischenraum (25) zwischen den benachbarten Flächen (14a,14b) der benachbarten Endabschnitte (13) sich in Axialrichtung symmetrisch zumindest teilweise unter einem Winkel oder gegenüber einer zu der Achse des Gelenkstiftes (15) senkrechten Ebene versetzt erstreckt.

2. Schloßvorrichtung nach Anspruch 1, **dadurch gekennzeichnet,** daß die Verbindungselemente Stabelemente (12) aufweisen, die mit ihren benachbarten Endabschnitten (13) aufeinander gestapelt sind, wobei die benachbarten Endabschnitte (13) durch den Gelenkstift (15) miteinander verbunden sind.

3. Schloßvorrichtung nach Anspruch 1 oder 2, **dadurch gekennzeichnet,** daß eine erste Fläche (14a) der benachbarten Flächen von einem der benachbarten Endabschnitte (13) konkav ausgebildet ist, während eine zweite Fläche (14b) der benachbarten Flächen des anderen der benachbarten Endabschnitte (13) konvex und passend zu der ersten konkaven Fläche (14a) ausgebildet ist.

4. Schloßvorrichtung nach zumindest einem der Ansprüche 1 bis 3, **dadurch gekennzeichnet,** daß eine erste der benachbarten Flächen (14a) von einem der benachbarten Endabschnitte (13) eine zylindrische Vertiefung aufweist, während die zweite Fläche (14b) an der anderen der benachbarten Endabschnitte (13) mit einem zylindrischen Vorsprung versehen ist, der in die zylindrische Vertiefung paßt.

5. Schloßvorrichtung nach zumindest einem der Ansprüche 1 bis 4, **dadurch gekennzeichnet,** daß ein Ringteil (13c) zur Verhinderung des Zugangs zu dem Gewindestift (15) zwischen benachbarten Flächen (14) der benachbarten Endabschnitten (13) der Stabelemente (12) angeordnet ist.

6. Schloßvorrichtung nach Anspruch 5, **dadurch gekennzeichnet,** daß das Ringteil (13c) in Nuten (13b) aufgenommen ist, die in den benachbarten Flächen (14) der benachbarten Endabschnitte (13) ausgebildet sind.

7. Schloßvorrichtung nach Anspruch 5, **dadurch gekennzeichnet,** daß das Ringteil (13c) ringförmige Vorsprünge (13d), die an den benachbarten Flächen (14) der benachbarten Endabschnitte (13) ausgebildet sind, umgibt.

8. Schloßvorrichtung nach Anspruch 1, **dadurch gekennzeichnet,** daß die Verbindungselemente Kettenverbindungsplatten (29) zur Verbindung benachbarter Stabelemente (12) aufweisen, wobei Endabschnitte (13) derselben zwischen ein Paar von Kettenverbindungsplatten (29) eingeschoben ist, wobei ein Endabschnitt der Kettenverbindungsplatten (29) mit einem konischen Abschnitt (14b) versehen ist, der in eine dazu passende konisch geformte Fläche (14a) des Endabschnittes (13) des Stabelementes (12) paßt.

9. Schloßvorrichtung nach zumindest einem der Ansprüche 1 bis 8**, dadurch gekennzeichnet,** daß der Gelenkstift als Bolzen (15) ausgebildet ist, der fest mit einem der benachbarten Endabschnitte (13) der Stabelemente (12) verbunden ist.

10. Schloßvorrichtung nach Anspruch 9, **dadurch gekennzeichnet,** daß der Bolzen (15) in eine Gewindeöffnung (18) geschraubt ist, die in einem der benachbarten Endabschnitte (13) der Stabelemente (12) vorgesehen ist, und der einen Bundabschnitt (20) aufweist, der in eine Durchgangsöffnung (17) des anderen der benachbarten Endabschnitte (13) eingesetzt ist, wobei der Bundabschnitt einen größeren Durchmesser aufweist als die Gewindeöffnung (18) sowie eine größere Länge als die Durchgangsöffnung (17).

## Revendications

1. Dispositif de verrouillage comprenant un corps de chaîne de verrouillage (10) ayant une pluralité d'organes de liaison (12, 29) reliés de manière pivotante les uns ou autres au niveau de leurs parties d'extrémité (13) adjacentes, par l'intermédiaire d'une liaison de pivotement (15, 29) comprenant un broche de pivotement (15), caractérisé en ce qu'un interstice (25), existant entre des surfaces adjacentes (14a, 14b) desdites parties d'extrémités (13) adjacentes, s'étend axialement et symétriquement au moins en partie sous un angle ou décalage donné, par rapport au plan perpendiculaire à l'axe de ladite broche de pivotement (15).

2. Dispositif de verrouillage selon la revendication 1, caractérisé en ce que les organes de liaison comprennent des organes formant barres (12), qui sont empilés les uns sur les autres par leurs parties d'extrémités (13) adjacentes, lesdites parties d'extrémité (13) étant reliées les unes aux autres par ladite broche de pivotement (15).

3. Dispositif de verrouillage selon la revendication 1 ou la revendication 2, caractérisé en ce qu'une première surface adjacente (14a) d'une des parties d'extrémité (13) adjacentes est concave, tandis que la deuxième surface adjacente (14b) de l'autre des parties d'extrémité (13) adjacentes est formée comme une surface convexe, s'ajustant dans ladite première surface concave (14a).

4. Dispositif de verrouillage selon l'une quelconque des revendications 1 à 3, caractérisé en ce qu'une première surface adjacente (14a) de l'une des parties d'extrémité (13) adjacentes est pourvue d'une cavité cylindrique, alors que la deuxième surface adjacente (14b) de l'autre des parties d'extrémité (13) adjacentes est pourvue d'une saillie cylindrique, s'ajustant dans ladite cavité cylindrique.

5. Dispositif de verrouillage selon l'une quelconque des revendications 1 à 4, caractérisé en ce qu'un organe annulaire (13c), prévu pour bloquer l'accès à la broche de pivotement (15), est disposé entre les surfaces adjacentes (14) des parties d'extrémité (13) adjacentes des organes formant barre (12).

6. Dispositif de verrouillage selon la revendication 5, caractérisé en ce que l'organe annulaire (13c) est reçu dans des gorges (13b), formées dans les surfaces adjacentes (14) des parties d'extrémité (13) adjacentes.

7. Dispositif de verrouillage selon la revendication 5, caractérisé en ce que l'organe annulaire (13c) entoure les saillies annulaires (13d) formées sur les surfaces adjacentes (14) des parties d'extrémité (13) adjacentes.

8. Dispositif de verrouillage selon la revendication 1, caractérisé en ce que les organes de liaison comprennent des plateaux (29) de liaison de chaîne, prévus pour relier les organes formant barre (12) adjacents, leurs parties d'extrémités (13) étant prises en sandwich entre une paire de plateaux (29) de liaison de chaîne, dans lequel une partie d'extrémité desdits plateaux (29) de liaison de chaîne est pourvue avec une partie conique (14b) s'ajustant dans une surface en forme de cône correspondant (14a) de la partie d'extrémité (13) de l'organe formant barre (12).

9. Dispositif de verrouillage selon l'une quelconque des revendications 1 à 8, caractérisé en ce que la broche de pivotement est formée par un boulon (15) relié rigidement à l'une des dites parties d'extrémité (13) adjacentes des organes formant barre (12).

10. Dispositif de verrouillage selon la revendication 9, caractérisé en ce que le boulon (15) est vissé dans un taraudage (18) ménagé dans l'une desdites parties d'extrémité (13) adjacentes des organes formant barre (12), et a une partie tige (20) qui est insérée dans un trou traversant (17) appartenant à l'autre des dites parties d'extrémité (13) adjacentes, ladite partie tige ayant un plus grand diamètre que ledit taraudage (18) et une plus grande longueur que ledit trou traversant (17).
